# EUROPÄISCHE PATENTSCHRIFT

(11) **EP 2 621 666 B1**
(45) Veröffentlichungstag und Bekanntmachung des Hinweises auf die Patenterteilung: **13.03.2019**
(21) Anmeldenummer: 11755309.9
(22) Anmeldetag: 06.09.2011
(51) Int. Cl.: B23K 35/36, B23K 1/00, B23K 1/20, B23K 101/14, B23K 1/008, B23K 35/365, F28F 21/08

(54) **VERFAHREN ZUR VERLÖTUNG VON BAUTEILEN**
PROCESS FOR SOLDERING COMPONENTS
PROCÉDÉ DE BRASAGE DE PIÈCES

(30) Priorität: 27.09.2010 DE 102010041436
(43) Veröffentlichungstag der Anmeldung: 07.08.2013
(73) Patentinhaber: MAHLE Behr GmbH & Co. KG, 70469 Stuttgart (DE)
(72) Erfinder: ENGLERT, Peter, 74177 Bad Friedrichshall (DE); TRAUTWEIN, Ingo, 74321 Bietigheim-Bissingen (DE); KAMINSKI, Lars, 73760 Ostfildern (DE)
(74) Vertreter: Grauel, Andreas
(86) Internationale Anmeldenummer: PCT/EP2011/065396
(87) Internationale Veröffentlichungsnummer: WO 2012/041666

(56) Entgegenhaltungen:
- EP-A1- 1 172 389
- EP-A1- 1 287 941
- DE-A1-102005 056 863
- US-A1- 2002 023 947

## Beschreibung

Die Erfindung betrifft ein Verfahren zur Verlötung von Bauteilen auf Aluminiumbasis, bei dem eine bindemittelhaltige Flussmittelzusammensetzung auf ein Bauteil aufgebracht wird. Die Erfindung betrifft zudem eine Flussmittelzusammensetzung für ein solches Verfahren sowie einen erfindungsgemäß hergestellten Wärmetauscher.

EP 1 287 941 A1 beschreibt Flussmittelzusammensetzungen mit einem Lösungsmittel, einem Bindemittel und einer Flussmittelkomponente, die unter anderem durch Eintauchen oder Aufsprühen auf ein zu verlötendes Bauteil aufgebracht werden können. Die Bauteile werden nach dem Aufbringen einem separaten Trocknungsschritt unterzogen, um den Lösungsmittelanteil zu entfernen.

Allgemein sind Lötverfahren mit kontrollierter Atmosphäre (CAB-Verfahren) bekannt, bei denen der Lötofen mit einem geeigneten Inertgas durchströmt wird, um für den Lötprozess schädlichen Sauerstoff fernzuhalten. Solche Verfahren sind im Allgemeinen nicht mit dem Auftrag von bindemittelhaltigen Flussmittelzusammensetzungen in Innenbereichen von Bauteilen kompatibel. Dies liegt darin begründet, dass bei der Pyrolyse des Bindemittels Sauerstoff in schädlichem Umfang entsteht und aus dem Innenbereich der Bauteile nicht durch das Inertgas abtransportiert wird.

Es ist die Aufgabe der Erfindung, ein Verfahren zur Verlötung von Bauteilen anzugeben, bei dem eine verringerte Menge schädlicher Pyrolyseprodukte aus dem Bindemittel entsteht.

Diese Aufgabe wird für ein eingangs genanntes Verfahren erfindungsgemäß mit den Merkmalen des Anspruchs 1 gelöst. Durch den Auftrag der Flussmittelzusammensetzung auf die auf die definiert erhitzte Oberfläche wird eine bessere Verteilung der Flussmittelzusammensetzung sowie eine effektivere Aktivierung des Bindemittels erzielt. Hierdurch kann der Bindemittelanteil in dem Flussmittel gering gehalten werden.

Unter einer Flussmittelzusammensetzung im Sinne der Erfindung werden dabei Gemische mit und ohne darin enthaltenem Lot oder Lotbestandteilen verstanden. Insbesondere kann Lot als Plattierung auf dem Bauteil vorgesehen sein. Es kann sich auch um ein System handeln, bei dem ein Teil des Lotes als Plattierung und ein anderer Teil als Beimengung in der Flussmittelzusammensetzung vorliegt.

Bei einer bevorzugten Ausführungsform der Erfindung umfasst das Verfahren den Schritt des Erhitzens auf eine Abdampftemperatur vor dem Schritt a., und Abdampfen von Kontaminationen, insbesondere Fetten, von dem Bauteil. Dieser Schritt zur Reinigung der Bauteile von flüchtigen Kontaminationen erfolgt regelmäßig und verbessert die Eigenschaften der Oberfläche. Besonders bevorzugt ist dabei die Abdampftemperatur größer als die Auftragtemperatur, wobei ein Erreichen der Auftragtemperatur durch Abkühlung, bevorzugt während oder nach dem Abdampfen, erfolgt. Hierdurch lässt sich auf einfache Weise Energie im Gesamtprozess einsparen. Der Auftrag der Flussmittelzusammensetzung ("Befluxung") ist vorteilhaft so ausgelegt, dass die Wärmekapazität des Bauteils zur vollständigen Trocknung ausreicht. In dem bevorzugten Verfahren wird nur die Energie mit den Bauteilen ausgetragen. Die ohnehin vorhandene Abluft der Befluxungskabine wird dann durch die direkte Applikation auf die noch heiße Oberfläche mit Lösungsmittel bzw. Wasserdämpfen angereichert. Dadurch wird die übliche feuchte heiße Abluft aus einem Trockner eingespart. Die Abluft der Befluxungskabine wird aber mit Feuchtigkeit angereichert, was wiederum die Abluftfiltration unterstützt.

Allgemein vorteilhaft beträgt die Auftragtemperatur zwischen 80 °C und 100 °C. Es hat sich gezeigt, dass in diesen Temperaturbereichen ein besonders gutes Ergebnis im Zusammenwirken von Verteilung, Trocknung und Aktivierung des Bindemittels erfolgt.

Bei einer bevorzugten Ausführungsform der Erfindung erfolgt das Aufbringen gemäß Schritt b. als lacktechnische Applikation. Besonders bevorzugt kann diese durch Sprüh-Beschichtung erfolgen, wodurch sich ein dünner und gleichmäßiger Auftrag gut kontrollierbar herstellen lässt. Alternativ oder ergänzend kann die Flussmittelzusammensetzung aber auch durch Aufstreichen, Eintauchen oder ähnliche geeignete Auftragsverfahren erfolgen.

Bei einer optimierten Weiterbildung der Erfindung ist es vorgesehen, dass eine Beladung der Bauteiloberfläche mit getrockneter Flussmittelzusammensetzung zwischen 3 und 40 g/m2, bevorzugt zwischen 5 und 20 g/m2, und besonders bevorzugt zwischen 7 und 14 g/m2, beträgt. Insgesamt wird so zum einen eine ausreichende Flussmittelmenge für eine prozesssichere Verlötung aufgebracht und zum anderen die Menge an Bindemittel bzw. dessen Pyrolyseprodukte gering gehalten.

Allgemein vorteilhaft erfolgt bei einem erfindungsgemäßen Verfahren eine Montage der Bauteile zu einer Komponente, insbesondere einem Wärmetauscher. Ebenso ist es allgemein vorteilhaft vorgesehen, dass die Bauteile zum gemeinsamen Verlöten in einen Lötofen verbracht werden, bevorzugt zur Verlötung in einer Schutzatmosphäre. Je nach Anforderungen können die Bauteile vor oder nach einer mechanischen Montage zu einer Komponente befluxt werden. Die Befluxung vor einer Montage ist dabei besonders geeignet, einen möglichst sparsamen und definierten Auftrag von Flussmittelzusammensetzung zu gewährleisten.

Die Aufgabe der Erfindung wird zudem für eine Flussmittelzusammensetzung, bevorzugt zur Verwendung in einem der Verfahrensansprüche 1 bis 8, gelöst, umfassend folgende Komponenten:
- zumindest eine partikelförmige Flussmittelkomponente, insbesondere ein Salz oder Silizium; und
- das organische Bindemittel, insbesondere ein Polyurethanharz;
wobei die Komponenten in einer Dispersion auf wässriger Basis vermischt sind.

Es hat sich gezeigt, dass Polyurethanharze als Bindemittel besonders geeignet sind, da sie bereits in geringen Mengen effektiv wirken. Zudem hat sich der überraschende Effekt gezeigt, dass der erfindungsgemäße Auftrag solcher Zusammensetzungen auf zuvor erwärmte Oberflächen eine besonders gute Verteilung und Haftung ergibt.

In bevorzugter Weiterbildung der Flussmittelzusammensetzung umfasst die Flussmittelkomponente ein Kalium-Aluminium-Fluorid, Cäsium-Fluorid, Lithium-Fiuorid und/oder Kalium-Silizium-Fluorid. Diese Salze können einzeln oder auf bekannte Weise als Mischungen vorliegen, um im Zuge des Hartlötens der Bauteile eine metallisch blanke, oxidfreie Oberfläche zu erzeugen. Ergänzend können auch weitere Komponenten wie etwa Siliziumpulver vorhanden sein.

Allgemein vorteilhaft ist es vorgesehen, dass ein Anteil des Bindemittels in der aufgetragenen und getrockneten Flussmittelzusammensetzung weniger als etwa 6%, bevorzugt weniger als etwa 4%, beträgt. Durch den erfindungsgemäßen Auftrag der Flussmittelzusammensetzung kann der Bindemittelanteil so niedrig gehalten werden, ohne die getrocknete Schicht in ihrer Struktur zu gefährden, Sämtliche Angaben von Prozentanteilen im vorliegenden Text sind jeweils als Gewichts-% zu verstehen.

Bei einem bevorzugten Ausführungsbeispiel der Erfindung ist das Bindemittel ein Polyurethan, das folgende Ausgangskomponenten umfasst:
- 5-60% Polyisocyanate;
- 0,5-40% polymere Polyole mit mittleren Molgewichten zwischen 500 und 6000 g/Mol;
- 0-10% Monoamine,
- 0,5-15% Aminopolyole und/oder Polyamine mit einem Molgewicht unter 500 g/Mol, wobei insbesondere eines der Polyamine eine ionische Gruppe enthält oder zur Ausbildung einer ionischen Gruppe befähigt ist;
- 0-10% NH-funktionelle, nichtionisch hydrophile Polyoxyalkylenether.

Die Aufgabe der Erfindung wird zudem für einen Wärmetauscher gelöst, der durch ein Verfahren nach einem der Ansprüche 1 bis 8 hergestellt wurde. Es kann sich insbesondere um einen Wärmetauscher für Kraftfahrzeuge handeln, zum Beispiel Kühlmittelkühler, Ölkühler, Ladeluftkühler, Abgaskühler, Kondensator oder Verdampfer einer Klimaanlage und vieles mehr. Besonders bei der Verlötung von Wärmetauscher bestehen eingeschlossene Volumina ("Innenräume"), die im Zuge eines Austauschs des Intergases bei einem CAB-Löten nicht oder nur unzureichend durchspült werden.

Ganz allgemein bieten das erfindungsgemäße Verfahren und die erfindungsgemäße Flussmittelzusammensetzung den Vorteil, dass bei der Pyrolyse des Bindemittels insgesamt nur ein geringer Teil an Sauerstoff entsteht. Bei einer Flussmittelbeladung von ca. 15g/m² auf einer Aluminiumoberfläche genügen bereits weniger als 4% Polymeranteil im Trockenfilm, um eine ausreichende Haftung auf der Oberfläche zu erzeugen. Es konnten nun Innenverlötungen ohne Atmosphärenaustausch bei einer Paintfluxschicht von 5g/m² dargestellt werden. Hierbei ergibt sich nun eine pyrolisierende Organikmenge von nur 187mg/m². Wird nun davon ausgegangen, dass bei der Pyrolyse des Bindemittels (bevorzugt Polyurethan) nur ca. 1/3 an sauerstoffhaltigen Pyrolyseprodukten entstehen, so ist eine Lötung ohne Austausch von Schutzgas-Atmosphäre möglich. Die für eine prozesssichere Verlötung relevante Obergrenze von etwa 50 mg/m² an sauerstoffhaltigen Verbindungen kann bei einem erfindungsgemäßen Verfahren eingehalten, zumindest aber nicht signifikant überschritten werden.

Weitere Vorteile und Merkmale der Erfindung ergeben sich aus den nachfolgend beschriebenen Ausführungsbeispielen sowie aus den abhängigen Ansprüchen.

Nachfolgend wird ein bevorzugtes Ausführungsbeispiel der Erfindung beschrieben und anhand der anliegenden Zeichnungen näher erläutert.
- Fig. 1: zeigt eine schematische Darstellung des Auftrags einer Flussmittelzusammensetzung nach dem Stand der Technik.
- Fig. 2: zeigt eine schematische Darstellung eines erfindungsgemäßen Auftrags einer Flussmittelzusammensetzung.

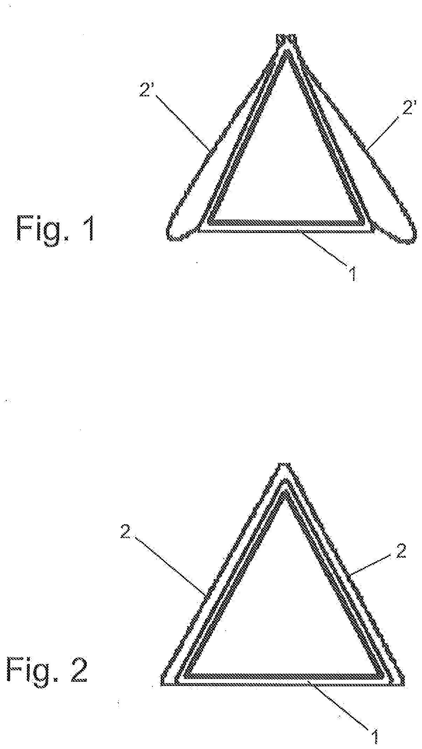

Fig. 1 zeigt eine schematische Darstellung eines Bauteils 1 aus einer Aluminium-Legierung. Das Bauteil wird zum Zweck einer späteren Montage mit anderen Bauteilen und gemeinsamen Verlötung in einem Lötofen mit einer Flussmittelzusammensetzung 2' beschichtet. Dabei erfolgt der Auftrag auf die kalte bzw. auf Raumtemperatur befindliche Oberfläche des Bauteils 1. Nach dem Auftrag wird das Bauteil in einer Trockenkammer verbracht und für einen definierten Zeitraum auf eine Trocknungstemperatur erhitzt. Bei diesem Vorgehen zeigt die getrocknete Flussmittelschicht 2' eine relativ ungleichmäßige Verteilung (hier angedeutet durch Verdickungen aufgrund der Schwerkraftwirkung). Um an sämtlichen Stellen eine Mindestbeladung mit Flussmittel sicherzustellen, ist ein entsprechender Überschuss an anderen Stellen in Kauf zu nehmen.

Fig. 2 zeigt die schematische Darstellung eines erfindungsgemäß verbesserten Auftrags einer Flussmittelzusammensetzung. Dabei wird das Bauteil zunächst auf eine definierte Auftragstemperatur erhitzt. Besonders bevorzugt liegt diese zwischen 80°C und 100°C. Wesentlich ist aber, dass die Bauteiltemperatur zumindest signifikant oberhalb der Raumtemperatur (20 °C) liegt.

In diesem Zustand wird die Flussmittelzusammensetzung auf das Bauteil aufgetragen, zum Beispiel durch Sprühauftrag. Durch die höhere Oberflächentemperatur ergibt sich eine erheblich gleichmäßigere Verteilung der Flussmittelzusammensetzung. Eine Erklärung hierfür könnte in einer niedrigeren Viskosität und/oder in einer verbesserten Aktivierung des Bindemittels liegen. Jedenfalls wird es ermöglicht, eine prozesssichere Verlötung mit einer geringen Menge an mittlerer Beladung mit Flussmittelzusammensetzung zu erzielen. Dabei beträgt die Beladung der getrockneten Schicht besonders bevorzugt zwischen 7 und 15 g/m².

Im vorliegenden Ausführungsbeispiel geht der Beschichtung mit Flussmittelzusammensetzung zunächst ein an sich bekannter Reinigungsschritt (Thermoentfettung) voraus. Dabei wird das Bauteil kontrolliert auf eine Abdampftemperatur erhitzt, um Fette und Verunreinigungen von der Oberfläche zu entfernen. Die Erhitzung erfolgt über ein definiertes Temperaturprofil, dessen Maximum oft oberhalb 200 °C liegt.

Im Regelfall liegt die Auftragtemperatur unterhalb der maximalen Abdampftemperatur, so dass zur Einsparung von Energie unmittelbar nach dem Abdampfvorgang eine kontrollierte Abkühlung des Bauteils auf die Auftragtemperatur erfolgt.

Sodann wird die Flussmittelzusammensetzung aufgetragen, wobei bevorzugt keine weitere Wärmeenergie in das Bauteil eingebracht wird. Bevorzugt reicht somit die Wärmekapazität des Bauteils in Verbindung mit der Differenz zwischen Auftragtemperatur und Umgebungstemperatur, um die Flussmittelzusammensetzung vollständig zu trocknen.

Bevorzugt können Auftrag und Trocknung in unmittelbarem räumlichen Anschluss nach der Thermoentfettung erfolgen, zum Beispiel in derselben Kabine mit demselben Abluftsystem. Besonders bevorzugt wird das Bauteil dabei über ein integriertes Transportsystem zunächst durch die Thermoentfettung und dann durch eine Auftragsanlage geführt.

Nachfolgend werden die beschichteten Bauteile mechanisch zu einer zu verlötenden Komponente montiert, zum Beispiel zu einem Wärmetauscher für ein Kraftfahrzeug. Die Komponente wird dann in einen Lötofen verbracht, wo die Bauteile in einem CAB-Verfahren unter kontrollierter Schutzatmosphäre verlötet werden. Dabei kann zumindest eines der Bauteile eine Innenverlötung erfahren, bei der die Flussmittelzusammensetzung in einem zwar mit Schutzgas gefüllten, aber nicht regulär von dem Schutzgas durchströmbaren Innenraum vorhanden ist. Aufgrund der erfindungsgemäß ermöglichten, geringen Belastung mit sauerstoffhaltigen Pyrolyseprodukten kann auch die Innenverlötung prozesssicher stattfinden.

Die Flussmittelzusammensetzung 2 des erfindungsgemäßen Ausführungsbeispiels kann folgende Zusammensetzung (in Gewichts-%) haben;
- 30% Flussmittel NOCOLOK ® der Firma Solvay Fluor GmbH, Hannover, Deutschland;
- 7% Binderlösung Nr. 411 0342 3522 der Weckerle Lackfabrik GmbH, Stuttgart (Binder auf Polyurethanbasis);
- 63% vollentsalztes Wasser.

Für eine alternative oder ergänzende Flussmittelzusammensetzung gilt:
Bevorzugt wird in der vorliegenden Erfindung als Bindemittel für das Flussmitttel eine aliphatische modifizierte Polyurethan-Dispersion, neutralisiert mit Triethanolamin eingesetzt.
Diese Polyurethandispersion zeigt nach der Filmbildung und Trocknung ein die Schutzgas-Hartlötung nicht störendes Pyrolyseverhalten.

Bei der Herstellung dieser Polyurethandispersion werden als flexibilisierende Bausteine längerkettige, aliphatische Verbindungen wie beispielsweise 1,6-Hexandiol oder Adipinsäure eingesetzt.

Bei der Polyurethandispersion handelt es sich dabei um 5-60 % Polyisocyanate, 0,5-40 % polymere Polyole mit mittleren Molgewichten von 500 bis 6000, 0-10 % Monoamine, 0,5-15 % Aminopolyole und/oder Polyamine mit einem Molgewicht unter 500, wobei bevorzugt eines dieser Polyamine eine ionische Gruppe enthält oder zur Ausbildung einer ionischen Gruppe, die kationisch oder anionisch sein kann, befähigt sein sollte, und 0-10 % NH-funktionelle nichtionisch hydrophile Polyoxyalkylenether. Geeignete Polyisocyanate sind bevorzugt Diisocyanate der Formel (NCO)2-R, wobei R einen aliphatischen Kohlenwasserstoffrest mit 4 bis 12 Kohlenstoffatomen, einen cycloaliphatischen Kohlenwasserstoffrest mit 6 bis 15 Kohlenstoffatomen, einen aromatischen Kohlenwasserstoffrest mit 6 bis 15 Kohlenstoffatomen oder einen aliphatischen Kohlenwasserstoffrest mit 7 bis 15 Kohlenstoffatomen bedeutet.

Beispiele für die bevorzugten Diisocxyanate sind Tetramethylendiisocyanat, Hexamethylendiisocyanat, 4,4'-Diisocyanatodiphenylmethan, 2,4'-Diisocyanato-diphenylmethan, 2,4-Diisocyanatotoluol, 2,6-Diisocyanatotoluol oder a, a, a,'a,-Tetramethyl-m-oder p-xylylendiisocyanat sowie deren Mischungen. Besonders bevorzugte Diisocyanate sind 4,4-Diisocyanatodicyclohexylmethan und das I-Isocyanato-3,3,5- trimethyl-5-isocyanatomethylcyclohexan (Isophorondiisocyanat)

Als Polyisocyanate werden Verbindungen herangezogen, die über Isocyanurat-, Allophanat-, Biuret-, Uretdion-oder Carbodiimidgruppen verfügen, Diese Polyisocyanate weisen hohe Funktionalitäten, von mehr als 2 auf.

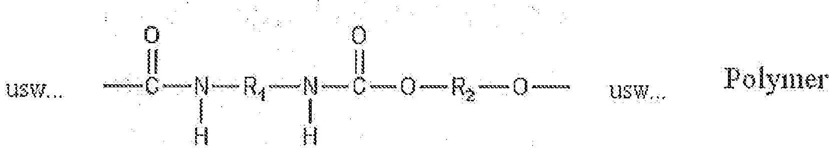

Als Alkohole werden zweiwertige Alkohole wie zum Beispiel 1,2-Propandiol, "1,3-Propandiol, Diethylenglykol, Ethylenglykol, 1,4- Butandiol, Neopentylglykol, oder 2-Ethylhexandiol eingesetzt. Als dreiwertige Alkohole werden eingesetzt Trimethylolpropan oder Glycerin, als 4-und höherwertige Alkohole z. B. Pentaerythrit.

## Patentansprüche

1. Verfahren zur Verlötung von mehreren Bauteilen (1) auf Aluminiumbasis, umfassend die Schritte:
a. Temperieren zumindest eines ersten Bauteils (1) auf eine definierte Auftragtemperatur, wobei die Auftragtemperatur zwischen 80 °C und 100 °C liegt;
b. Aufbringen einer Flussmittelzusammensetzung (2) auf das erhitzte Bauteil (2), wobei die Flussmittelzusammensetzung (2) als wässrige Dispersion mit einem organischen Bindemittel ausgebildet ist und
wobei die Flussmittelzusammensetzung folgende Komponenten umfasst:
- zumindest eine partikelförmige Flussmittelkomponente, insbesondere ein Salz oder Silizium; und
- das organische Bindemittel, insbesondere ein Polyurethanharz;
wobei die Komponenten in einer Dispersion auf wässriger Basis vermischt sind.

2. Verfahren nach Anspruch 1, **gekennzeichnet durch** den Schritt:
- Erhitzen auf eine Abdampftemperatur vor dem Schritt a., und Abdampfen von Kontaminationen, insbesondere Fetten, von dem Bauteil.

3. Verfahren nach Anspruch 2, **dadurch gekennzeichnet, dass** die Abdampftemperatur größer als die Auftragtemperatur ist, wobei ein Erreichen der Auftragtemperatur durch Abkühlung, insbesondere während oder nach dem Abdampfen, erfolgt.

4. Verfahren nach einem der vorhergehenden Ansprüche, **dadurch gekennzeichnet, dass** das Aufbringen gemäß Schritt b. als lacktechnische Applikation, insbesondere durch Sprüh-Beschichtung, erfolgt.

5. Verfahren nach einem der vorhergehenden Ansprüche, **dadurch gekennzeichnet, dass** eine Beladung der Bauteiloberfläche mit getrockneter Flussmittelzusammensetzung (2) zwischen 3 und 40 g/m², insbesondere zwischen 5 und 20 g/m², besonders bevorzugt zwischen 7 und 15 g/m², beträgt.

6. Verfahren nach einem der vorhergehenden Ansprüche, **gekennzeichnet durch** den Schritt:
- Montage der Bauteile (1) zu einer Komponente, insbesondere einem Wärmetauscher.

7. Verfahren nach einem der vorhergehenden Ansprüche, **gekennzeichnet durch** den Schritt:
- Verbringen der Bauteile (1) in einen Lötofen zum gemeinsamen Verlöten, insbesondere in einer Schutzatmosphäre.

8. Verfahren nach einem der vorhergehenden Ansprüche, **dadurch gekennzeichnet, dass** die Flussmittelkomponente ein Kalium-Aluminium-Fluorid, Cäsium-Fluorid, Lithium-Fluorid und/oder Kalium-Silizium-Fluorid umfasst.

9. Verfahren nach einem der vorhergehenden Ansprüche, **dadurch gekennzeichnet, dass** ein Anteil des Bindemittels in der aufgetragenen und getrockneten Flussmittelzusammensetzung (2) weniger als etwa 6%, insbesondere weniger als etwa 4%, beträgt.

10. Verfahren nach einem der vorhergehenden Ansprüche, **dadurch gekennzeichnet, dass** das Bindemittel ein Polyurethan ist, das folgende Ausgangskomponenten umfasst:
- 5-60% Polyisocyanate;
- 0,5-40% polymere Polyole mit mittleren Molgewichten zwischen 500 und 6000 g/Mol;
- 0-10% Monoamine;
- 0,5-15% Aminopolyole und/oder Polyamine mit einem Molgewicht unter 500 g/Mol, wobei insbesondere eines der Polyamine eine ionische Gruppe enthält oder zur Ausbildung einer ionischen Gruppe befähigt ist;
- 0-10% NH-funktionelle, nichtionisch hydrophile Polyoxyalkylenether.

## Claims

1. A method for soldering several structural elements (1) based on aluminium, comprising the steps:
a. tempering at least one first structural element (1) to a defined application temperature, wherein the application temperature is between 80°C and 100°C;
b. applying a flow means composition (2) to the heated structural element (2), wherein the flow means composition (2) is formed as a watery dispersion with an organic binder and wherein the flow means composition comprises the following components:
- at least one particulate flow means component, in particular a salt or silicon; and
- the organic binder, in particular a polyurethane resin;
wherein the components are mixed in a dispersion on a watery basis.

2. The method according to claim 1, **characterised by** the step:
- heating to an evaporation temperature before step a; and evaporating of contaminations, in particular fats, from the structural element.

3. The method according to claim 2, **characterised in that** the evaporation temperature is greater than the application temperature, wherein the application temperature is reached by cooling, in particular during or after the evaporation.

4. The method according to one of the preceding claims, **characterised in that** the applying according to step b. is made as a lacquer technology application, in particular by spray coating.

5. The method according to one of the preceding claims, **characterised in that** a loading of the surface of the structural element with dried flow means composition (2) is between 3 and 40 g/m², in particular between 5 and 20 g/m², especially preferred between 7 and 15 g/m².

6. The method according to one of the preceding claims, **characterised by** the step:
- assembly of the structural elements (1) to one component, in particular a heat exchanger.

7. The method according to one of the preceding claims, **characterised by** the step:
- placing the structural elements (1) in a soldering furnace for common soldering, in particular in a protective atmosphere.

8. The method according to one of the preceding claims, **characterised in that** the flow means component comprises a potassium aluminium fluoride, cesium fluoride, lithium fluoride and/or potassium silicon fluoride.

9. The method according to one of the preceding claims, **characterised in that** a percentage of the binder in the applied and dried flow means composition (2) is less than about 6%, in particular less than about 4%.

10. The method according to one of the preceding claims, **characterised in that** the binder is a polyurethane which comprises the following starting components:
- 5-60% of polyisocyanate;
- 0.5-40% of polymeric polyols with medium molar weights between 500 and 6000 g/mole;
- 0-10% of monoamines;
- 0.5-15% of aminopolyols and/or polyamines with a molar weight below 500 g/mole, wherein in particular one of the polyamines contains an ionic group or is capable of forming an ionic group;
- 0-100 of NH-functional, non-ionic hydrophilic polyoxyalkylene ether.

## Revendications

1. Procédé de brasage de plusieurs pièces (1) à base d'aluminium, ledit procédé comprenant les étapes consistant :
a. à tempérer au moins une première pièce (1) à une température d'application définie, où la température d'application est comprise entre 80°C et 100°C ;
b. à appliquer une composition de fondant (2) sur la pièce chauffée (2), où la composition de fondant (2) est conçue comme une dispersion aqueuse contenant un liant organique, et
où la composition de fondant comprend les composants suivants :
- au moins un composant de fondant se présentant sous la forme de particules, en particulier un sel ou du silicium ; et
- le liant organique, en particulier une résine de polyuréthane ;
où les composants sont mélangés dans une dispersion à base aqueuse.

2. Procédé selon la revendication 1, **caractérisé par** l'étape consistant :
- à chauffer à une température d'évaporation avant l'étape a., et à éliminer de la pièce, par évaporation, des éléments contaminants, en particulier des graisses.

3. Procédé selon la revendication 2, **caractérisé en ce que** la température d'évaporation est supérieure à la température d'application, où la température d'application est atteinte par refroidissement, en particulier pendant ou après l'évaporation.

4. Procédé selon l'une quelconque des revendications précédentes, **caractérisé en ce que** le processus d'application selon l'étape b. est réalisé comme une application de vernis mise en oeuvre par une technique éprouvée, en particulier par pulvérisation.

5. Procédé selon l'une quelconque des revendications précédentes, **caractérisé en ce qu'**une charge de la surface des pièces, avec une composition de fondant séché (2), est comprise entre 3 g/m² et 40 g/m², en particulier entre 5 g/m² et 20 g/m², de façon particulièrement préférable entre 7 g/m² et 15 g/m².

6. Procédé selon l'une quelconque des revendications précédentes, **caractérisé par** l'étape comprenant :
- le montage des pièces (1) pour former un composant, en particulier un échangeur de chaleur.

7. Procédé selon l'une quelconque des revendications précédentes, **caractérisé par** l'étape consistant :
- à placer les pièces (1) dans un four à braser, pour les braser ensemble, en particulier dans une atmosphère de protection.

8. Procédé selon l'une quelconque des revendications précédentes, **caractérisé en ce que** le composant du fondant contient un fluorure d'aluminium et de potassium, un fluorure de césium, un fluorure de lithium et / ou un fluorure de silicium et de potassium.

9. Procédé selon l'une quelconque des revendications précédentes, **caractérisé en ce qu'**une proportion du liant contenu dans la composition de fondant (2) appliqué et séché est inférieure à 6 % environ, en particulier inférieure à 4 % environ.

10. Procédé selon l'une quelconque des revendications précédentes, **caractérisé en ce que** le liant est un polyuréthane qui contient les composants de départ suivants :
- de 5 % à 60 % de polyisocyanate ;
- de 0,5 % à 40 % de polyols polymères ayant des poids molaires moyens compris entre 500 g/mol et 6000 g/mol ;
- de 0 % à 10 % de monoamines ;
- de 0,5 % à 15 % d'aminopolyols et / ou de polyamines ayant un poids molaire inférieur à 500 g/mol, où en particulier l'une des polyamines contient un groupe ionique ou bien est en mesure de former un groupe ionique ;
- de 0 % à 10 % d'éther de polyoxyalkylène hydrophile non ionique, à fonction NH.
